# EUROPEAN PATENT APPLICATION

(11) **EP 1 333 519 A2**
(43) Date of publication of application: **06.08.2003**
(21) Application number: 03250489.6
(22) Date of filing: 28.01.2003
(51) Int. Cl.: H01M 8/04

(54) **Fuel cell with fuel droplet fuel supply**

(30) Priority: 31.01.2002 US 61830
(71) Applicant: Hewlett-Packard Company, Palo Alto, CA 94304 (US)
(72) Inventor: Liu, Qin, Corvallis, OR 97330 (US); Haluzak, Charles C., Corvallis, OR 97333 (US); Leban, Marzio, Corvallis, OR 97330 (US); Plotkin, Lawrence R., Corvallis, OR 97330 (US); Trueba, Kenneth E., Philomath, OR 97370 (US)
(74) Representative: Jackson, Richard Eric

(57) **Abstract**

A fuel cell system in accordance with a present invention includes a fuel cell (102) including at least one anode (106) and a fuel supply apparatus (118) that supplies a plurality of fuel droplets (120).

## Description

### BACKGROUND OF THE INVENTIONS

### Field of the Inventions

The present inventions are related to fuel cells, fuel cell fuel delivery systems and drop producing devices that may, for example, be used in fuel cell fuel delivery systems.

### Description of the Related Art

Fuel cells, which convert fuel and oxidant into electricity and reaction product(s), are advantageous because they possess higher energy density and are not hampered by lengthy recharging cycles, as are rechargeable batteries, and are relatively small, lightweight and produce virtually no environmental emissions. Nevertheless, the inventors herein have determined that conventional fuel cells are susceptible to improvement. More specifically, the inventors herein have determined that it would be advantageous to provide improved systems for delivering fuel to fuel cell anodes.

Conventional fuel cell fuel delivery systems continuously pump liquid fuel to the anodes and immerse the anodes in fuel. The inventors herein have determined that this method of delivering fuel to the anodes leads to fuel crossover from the anode to cathode, which reduces the overall efficiency of the fuel cell. Fuel crossover also necessitates the use of lower concentration fuels, which results in a system that is bulkier and heavier than it otherwise would be. It is also difficult to achieve a uniform distribution of fuel over the anodes using convention fuel cell fuel delivery systems.

### BRIEF DESCRIPTION OF THE DRAWINGS

Detailed description of preferred embodiments of the inventions will be made with reference to the accompanying drawings.
Figure 1 is a diagrammatic view of a fuel cell system in accordance with a preferred embodiment of a present invention.
Figure 2 is an exploded section view of a membrane electrode assembly that may be used in conjunction the illustrated embodiments.
Figure 3 is a side view showing fuel being delivered to a pair of anodes in accordance with a preferred embodiment of a present invention.
Figure 4 is a diagrammatic view of a fuel cell system in accordance with a preferred embodiment of a present invention.
Figure 5 is a partial plan view of a nozzle plate that may be used in conjunction with the fuel cell system illustrated in Figure 4.
Figure 6a is a side, partial section view of a portion of a thermal drop ejector that may be used in conjunction with the fuel cell systems illustrated in Figures 4, 7 and 8.
Figure 6b is a side, partial section view of a portion of a thermal drop ejector that may be used in conjunction with the fuel cell systems illustrated in Figures 4, 7 and 8.
Figure 7 is a diagrammatic view of a fuel cell system in accordance with a preferred embodiment of a present invention.
Figure 8 is a diagrammatic view of a fuel cell system in accordance with a preferred embodiment of a present invention.
Figure 9 is a diagrammatic view of a fuel cell system in accordance with a preferred embodiment of a present invention.
Figure 10 is a partial plan view of a nozzle plate that may be used in conjunction with the fuel cell system illustrated in Figure 9.
Figure 11 is a side, partial section view of a portion of a piezoelectric drop ejector that may be used in conjunction with the fuel cell system illustrated in Figure 4.
Figure 12 is an exploded section view of a piezoelectric ejector that may be used in conjunction with the piezoelectric drop ejector illustrated in Figure 11.
Figure 13 is a diagrammatic view of a fuel cell system in accordance with a preferred embodiment of a present invention.
Figure 14 is a partial plan view of a portion of a flextensional drop ejector that may be used in conjunction with the fuel cell system illustrated in Figure 13.
Figure 15 is a section view of a portion of a flextensional drop ejector that may be used in conjunction with the fuel cell system illustrated in Figure 13.
Figure 16 is a partial section view showing a flextensional drop ejector in the first resonant mode of deflection.
Figure 17 is a partial section view showing a flextensional drop ejector in the second resonant mode of deflection.
Figure 18 is a partial diagrammatic view of a fuel cell system in accordance with a preferred embodiment of a present invention.
Figure 19 is a diagrammatic view of a fuel cell system in accordance with a preferred embodiment of a present invention.
Figure 20 is a perspective view of an ultrasonic atomizer in accordance with a preferred embodiment of a present invention.
Figure 21 is a partial section view taken along line 21-21 in Figure 20.
Figure 22 is a top view of an ultrasonic atomizer housing in accordance with a preferred embodiment of a present invention.
Figures 23a-23d are section and plan (Figure 23c) views showing a method of manufacturing a fluidic chamber subassembly in accordance with a preferred embodiment of a present invention.
Figures 24a-24e are partial section views showing a method of manufacturing a nozzle plate subassembly in accordance with a preferred embodiment of a present invention.
Figure 25 is a section view showing a flextensional drop ejector in accordance with a preferred embodiment of a present invention.
Figures 26a-26i are section views showing a method of manufacturing a flextensional drop ejector in accordance with a preferred embodiment of a present invention.

### DETAILED DESCRIPTION OF THE PREFERRED EMBODIMENTS

The following is a detailed description of the best presently known modes of carrying out the inventions. This description is not to be taken in a limiting sense, but is made merely for the purpose of illustrating the general principles of the inventions. It is noted that detailed discussions of fuel cell structures that are not pertinent to the present inventions have been omitted for the sake of simplicity.

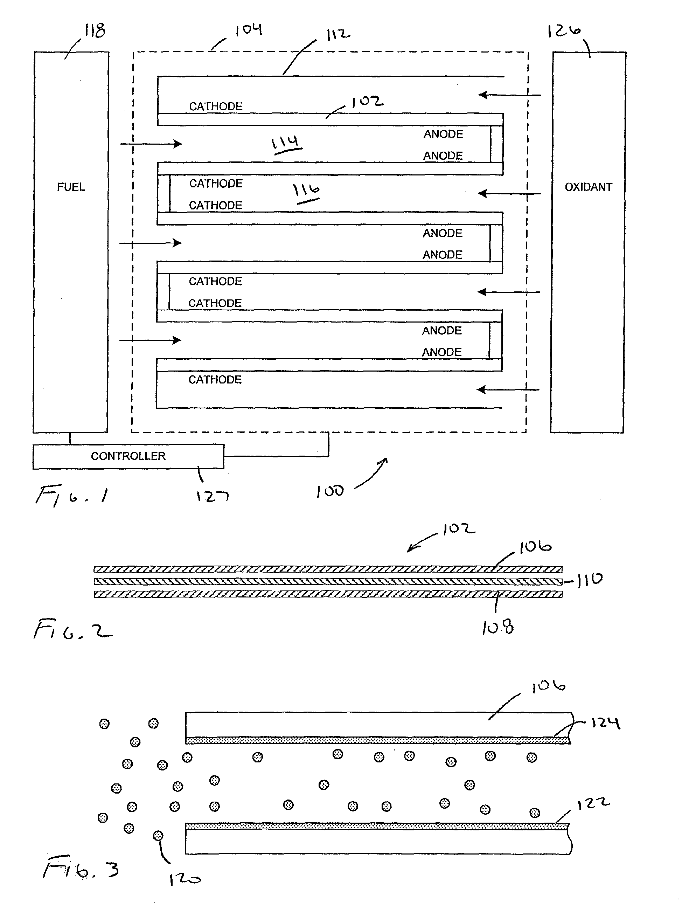

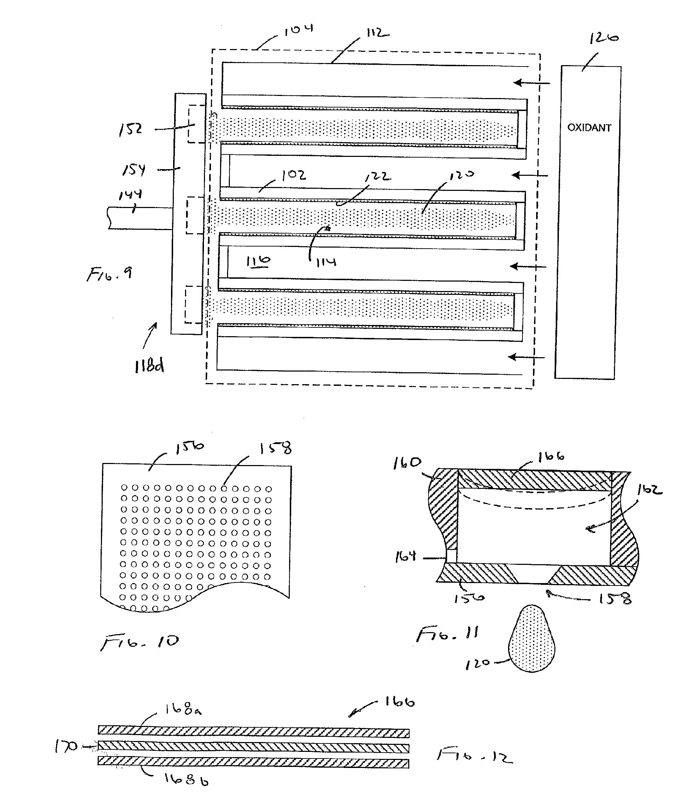

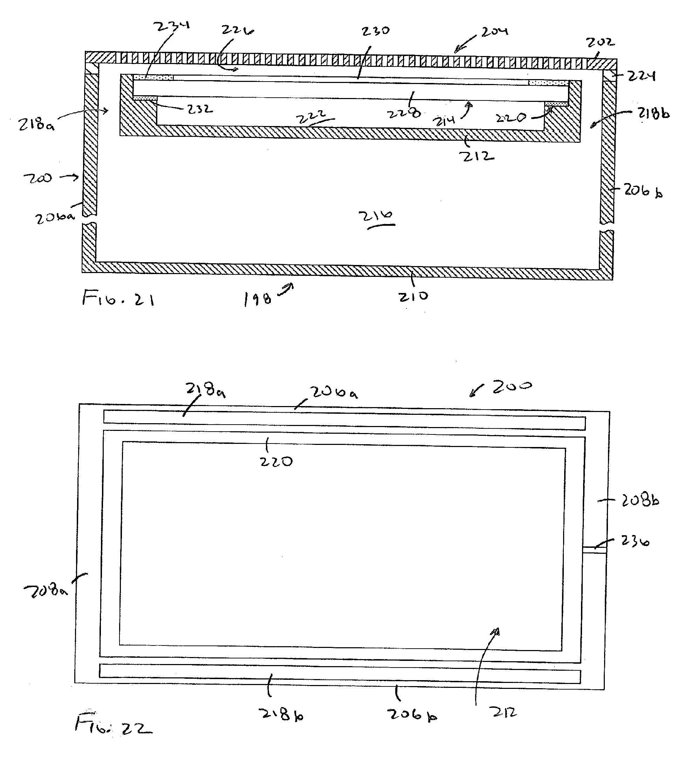

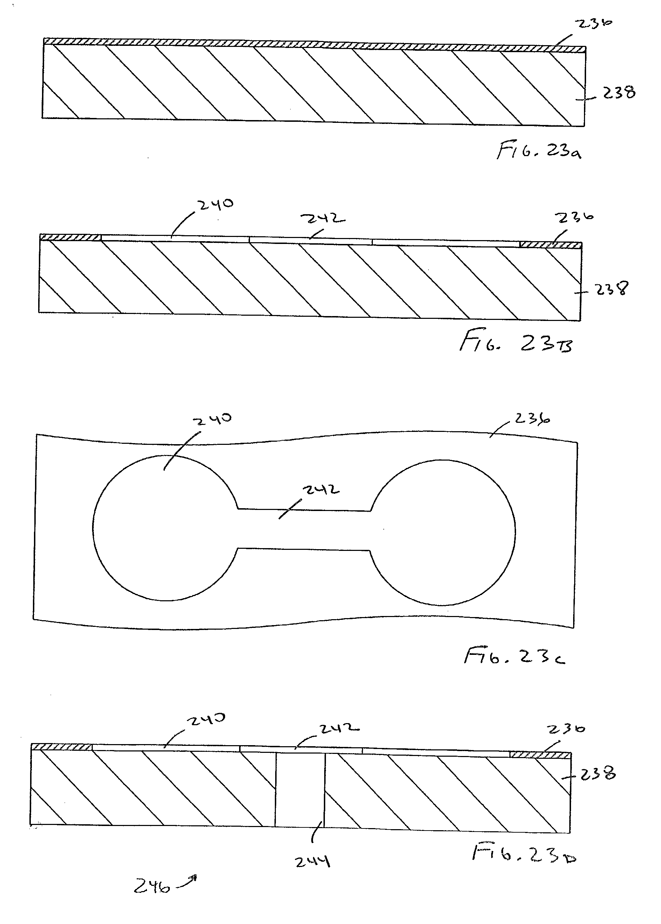

The present inventions are also applicable to a wide range of fuel cell technologies, including those presently being developed or yet to be developed. Thus, although various exemplary fuel cell system are described below with reference to a proton exchange membrane ("PEM") fuel cell, other types of fuel cells, such as solid oxide fuel cells, are equally applicable to the present inventions. Additionally, although the exemplary fuel cell stacks illustrated in Figures 1-19 have anodes facing one another, it should be noted that the inventions herein are applicable to the traditional bipolar configuration as well as the monopolar design. Some of the inventions herein, such as the exemplary ultrasonic atomizer illustrated in Figures 21 and 22 and the exemplary flextensional drop ejectors illustrated in Figures 23a-26i, also have applications outside the fuel cell arena.

As illustrated for example in Figures 1 and 2, a fuel cell system 100 in accordance with one embodiment of the present invention includes a plurality of PEM fuel cells 102 arranged in a stack 104. Each PEM fuel cell 102 includes an anode 106 and a cathode 108 separated by a thin, ionically conducting PEM 110. The anode 106 and cathode 108, on opposing faces of the PEM 110, are each composed of a thin catalyst layer and, optionally, a gas diffusion layer. The individual cells 102 in the exemplary system 100 are stacked such that the anodes 106 of adjacent cells face one another, with a space of about 0.5 mm to about 5.0 mm therebetween, and the cathodes 108 of adjacent cells face one another, with a space of about 0.5 mm to about 5.0 mm therebetween. So arranged, the spaces between adjacent anodes 106 define fuel passages 114 and the spaces between adjacent cathodes 108 (or a cathode and a wall 112) define oxidant passages 116. The cathodes 108 at the ends of the stack 104 face walls 112. Adjacent anodes 106 may be connected to one another in parallel, and their respective cathodes 108 may also be connected in parallel, and the parallel pairs of anodes are connected in series to the next parallel pairs of cathodes. The preferred connection scheme depends on the power requirements of the load.

Fuel, such as a methanol/water mixture of about 64% methanol by weight, is supplied to the fuel passages 114 and oxygen or air is supplied to the oxidant passages 116. The fuel is electrochemically oxidized at the anodes 106, thereby producing protons that migrate across the conducting PEMs 110 and react with the oxygen at the cathodes 108 to produce a bi-product (water in the exemplary embodiment). Carbon dioxide is produced at the anode. In accordance the present inventions, and as illustrated for example in Figures 1 and 3, the fuel is supplied to the anodes 106 by a fuel supply apparatus 118 that creates fine spray of fuel droplets 120 that are directed through the fuel passages 114 to the anodes. Fuel layers 122 will be created on the anode surfaces 124 as the droplets 120 come to rest on the surfaces.

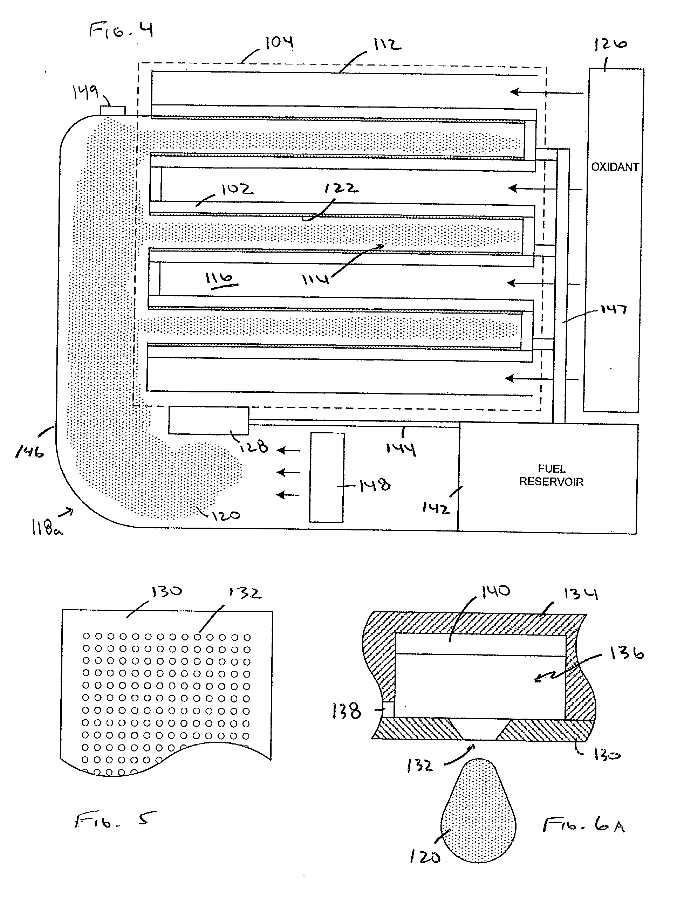

A variety of embodiments of the fuel supply apparatus 118 (numbered 118a-118f) are discussed in detail below with reference to Figures 4-22. Oxidant may be supplied to the oxidant passages 116 by an oxidant supply apparatus 126. Preferably, the oxidant supply apparatus 126 will simply be a suitable vent (and fan, if necessary) that allows atmospheric air to flow into the oxidant passages 116 to the cathodes 108. Bi-products of the reactions are either recycled or vented.

The fuel droplets 120 in the spray supplied to the anodes 106 will preferably be about 0.5 aL (0.5 x 10⁻¹⁸ L) to about 260 pL (260 x 10⁻¹² L) in volume, although the size may vary from application to application. A controller 127 (see Figure 4) may be used to control the output of the fuel supply apparatus 118 so that the fuel is supplied at rate that is proportional to current draw. At steady state, the fuel layers 122 will be consumed at the same rate that the fuel is being deposited. The manner in which variations in output is accomplished will vary with the type of fuel supply apparatus and its length of operation, and will typically involve the drop size, the frequency at which the drops are produced and, where portions of the fuel supply apparatus may be actuated separately, the number of portions actuated. The controller 127 may, alternatively, be eliminated and the control functions provided by the host device that is being powered by the exemplary fuel cell system 100.

There are a variety of advantages associated with such fuel cell systems. For example, the present fuel cell systems provide reduced fuel crossover and, accordingly, increased efficiency, as compared to conventional systems. Reduced fuel crossover also facilitates the use of higher concentration fuel, thereby lowering the overall weight of the system. The present fuel cell systems also provide improved fuel distribution at the anode, and facilitate improved control of the fuel delivery process, thereby further improving fuel utilization.

As illustrated for example in Figures 4-6a, a fuel cell system (such as the fuel cell system 100 illustrated in Figure 1) may be provided with a fuel supply apparatus 118a that produces a spray of droplets 120 with a thermal drop ejector 128 which functions in a manner that is substantially similar to a thermal inkjet device. Although the present inventions are not limited to any particular type of thermal drop ejector, the exemplary thermal drop ejector 128 includes a nozzle plate 130, in which a plurality of nozzles 132 (or other orifices) are formed, and a substrate 134, in which a corresponding plurality of fuel vaporization chambers 136 and supply channels 138 are formed. The nozzles 132 are preferably sized and shaped such that they will create enough capillary force to prevent the fuel from leaking regardless of the orientation of the nozzle plate 130. A heating element 140, such as a resistor, is positioned within each of the fuel vaporization chambers 136 and connected to a conductive substructure (not shown) that implements the firing of the heating elements. When a heating element 140 is fired, the fuel within the associated chamber 136 will be heated and a fuel droplet 120 will be ejected from the nozzle 132.

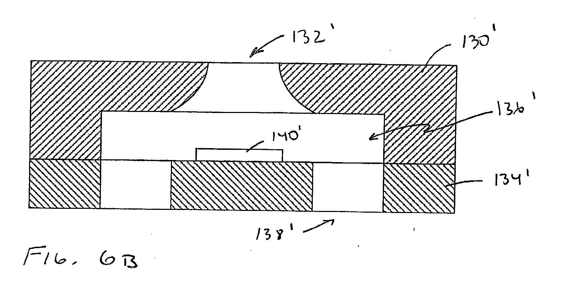

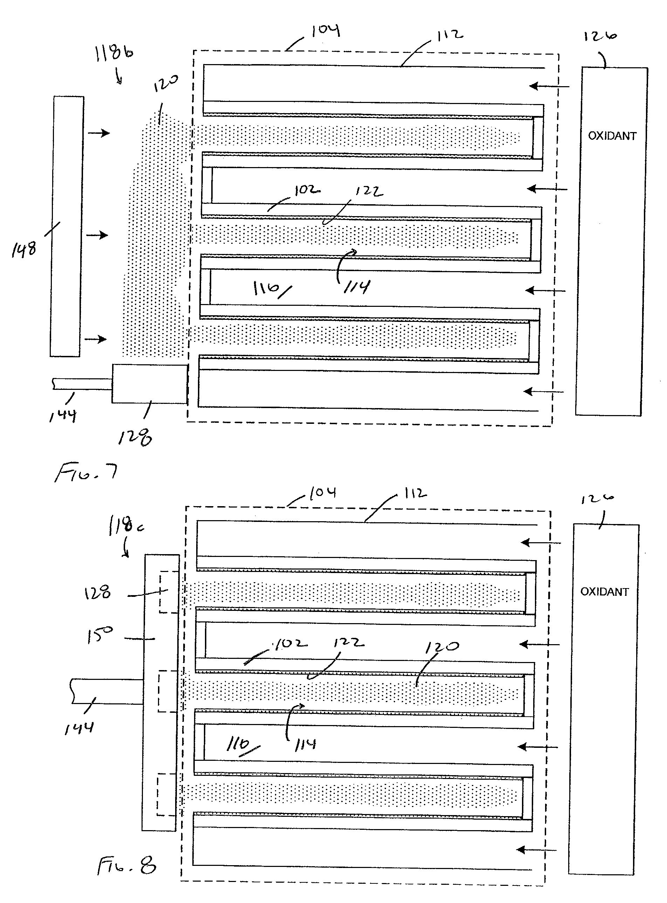

One specific example of a thermal inkjet device that could be used to eject fuel droplets in the manner described above (and below with reference to Figures 7 and 8) is the C4800A series inkjet cartridge manufactured by Hewlett-Packard Company. Here, the nozzle plate of the C4800A series inkjet cartridge would be modified such that there were 4 nozzles per heating element, each nozzle being about 3-4 µm, which would produce drops that are approximately 0.5 pL. Alternatively, as illustrated in Figure 6b, another exemplary inkjet device includes a nozzle plate 130', in which a plurality of nozzles 132' (or other orifices) and fuel vaporization chambers 136' formed, and a substrate 134', in which a corresponding plurality of pairs of supply channels 138' are formed. A heating element 140', such as a resistor, is positioned within each of the fuel vaporization chambers 136'. Although the inkjet device illustrated in Figure 6b is not limited to any particular size, the exemplary embodiment is intended to produce a 0.01 pL droplet and is dimensioned as follows: the nozzles 132' are about 2 µm, the vaporization chambers 136' are about 10 µm x 10 µm x 2 µm, the supply channels 138' are about 2 µm x 2 µm, and the heating element 140' is about 3 µm x 3 µm (which is smaller than the heating element a C4800A series inkjet cartridge).

The volume of fuel that is supplied to the anodes 106 may be controlled by controlling the frequency at which the heating elements are fired and the number of heating elements that are fired at a give time. The respective sizes of the nozzles and vaporization chambers may also be varied within a particular thermal drop ejector so that, for example, when more fuel is needed the heating elements associated with the larger reservoirs may be fired.

In the exemplary embodiment illustrated in Figure 4, fuel may be stored in a fuel reservoir 142 and supplied to the thermal drop ejector 128 by way of a supply line 144. The fuel reservoir 142 may either be positioned above the thermal drop ejector 128 so that the fuel will be gravity fed or, alternatively, a pump may be provided so that the fuel supply apparatus 118a will be operable in any orientation. The fuel may also be stored within the fuel reservoir 142 under pressure. Where a fuel/water mixture is employed, the fuel and water may be stored separately and their respective feed rates controlled to obtain the desired stoichiometric feed for the anodes 106.

The exemplary fuel supply apparatus 118a is also provided with a distribution system to transport the spray of fuel droplets 120 to the fuel passages 114. In the exemplary embodiment illustrated in Figure 4, the fuel droplets 120 are blown through a manifold arrangement 146 to the fuel passages 114 by a fan 148. Baffles (not shown) may be provided to direct the droplets 120 into the individual fuel passages 114.

Because the exemplary stack is a closed system, a return 147 is provided to direct any unused fuel back to the fuel reservoir 142. The return 147 is configured to allow the oxidant to flow into the oxidant passages 116 in the manner shown in Figure 4. The relatively small amount of fuel that remains on the anodes 106 when the system is shut down may be used to charge an on-board energy storage device such as a battery or capacitor. Additionally, because more carbon dioxide bi-product is formed than is needed to fill the system chamber, a pressure release valve 149 is provided to vent the excess gas. The return 147 and pressure release valve 149, which may be incorporated into any of the illustrated embodiments, are only shown in Figure 4 for purposes of simplicity.

As illustrated for example in Figure 7, a fuel supply apparatus 118b in accordance with another exemplary implementation includes a thermal drop ejector 128 that is positioned such that it fires the fuel droplets 120 upwardly. The droplets are blown by a fan 148 into the fuel passages 114 to form the fuel layers 122 on the surface of the anodes. Alternatively, the exemplary fuel supply apparatus 118c illustrated in Figure 8 includes a plurality of thermal drop ejectors 128 which are supported by a support structure 150 that includes a manifold (not shown) to direct fuel to each of the thermal drop ejectors. Here, the thermal drop ejectors 128 fire the fuel droplets 120 directly into the fuel passages 114 to form the fuel layers 122. It should also be noted that, in addition to the devices described above, an unmodified C4800A series inkjet cartridge may be used as the thermal drop ejector in the embodiment illustrated in Figure 8.

Another type of fuel drop ejector that may form part of an implementation of a present inventions is a piezoelectric fuel drop ejector and piezoelectric drop ejectors may be used in place of thermal drop ejector(s) in any of the embodiments illustrated in Figures 4-8. Referring more specifically to Figures 9-12, a fuel cell system (such as the fuel cell system 100 illustrated in Figure 1) may be provided with a fuel supply apparatus 118d that includes a plurality of piezoelectric drop ejectors 152 which are supported by a support structure 154 that includes a manifold (not shown) to direct fuel to each of the piezoelectric drop ejectors. Here too, the fuel droplets 120 are fired directly into the fuel passages 114 to form the fuel layers 122.

Although the present inventions are not limited to any particular type of piezoelectric drop ejector, the exemplary piezoelectric drop ejectors 152 each include a nozzle plate 156, in which a plurality of nozzles 158 (or other orifices) are formed, and a substrate 160, in which fuel ejection chambers 162 and supply channels 164 are formed. A piezoelectric actuator 166, which consists of a pair of conductors 168a and 168b and a piezoelectric disk 170, is positioned within each of the fuel ejection chambers 162. Suitable materials and laminates for the conductors 168a and 168b include titanium/gold ("Ti/Au") and aluminum ("Al"), while suitable materials for the piezoelectric disk 170 include zinc oxide ("ZnO") and lead zirconium titanate ("PZT"). The conductors 168a and 168b are connected to a power supply/driver (not shown) that implements the firing of the actuators 166. When a piezoelectric actuator 166 is fired, it will deflect from the solid line position illustrated in Figure 11 to the dash line position illustrated in Figure 11 and force fuel out of the associated chamber 162 so that a fuel droplet 120 will be ejected from the nozzle 158. One example of a piezoelectric inkjet device that could be used to eject fuel droplets in the manner described above is the inkjet device found in the Epson Stylus Color 777 inkjet printer.

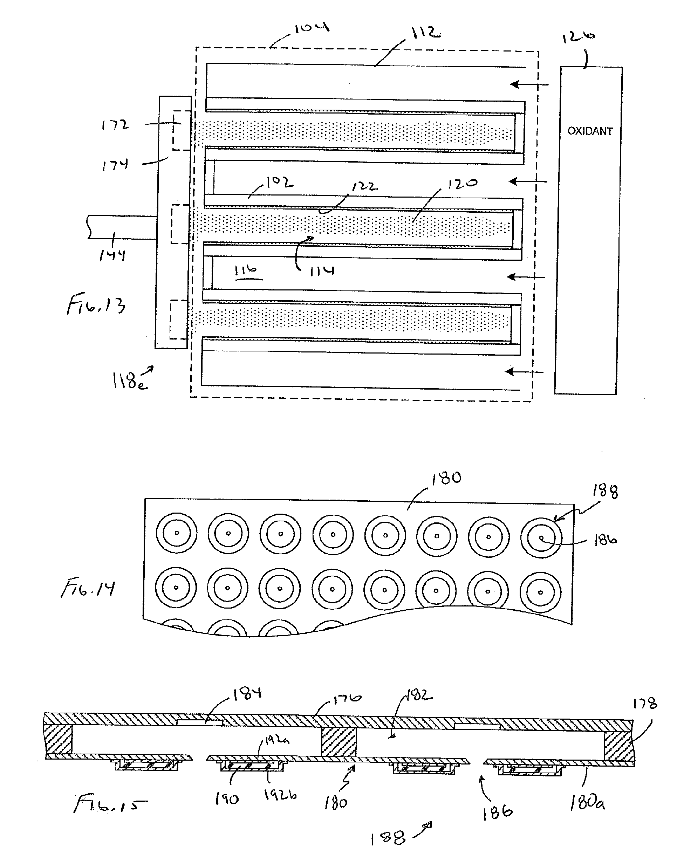

Turning to Figures 13-15, a fuel cell system (such as the fuel cell system 100 illustrated in Figure 1) may be provided with a fuel supply apparatus 118e that produces droplets with a flextensional drop ejector and flextensional drop ejectors may be used in place of thermal drop ejector(s) in any of the embodiments illustrated in Figures 4-8. The fuel supply apparatus 118e includes a plurality of flextensional drop ejectors 172 which are supported by a support structure 174 that includes a manifold (not shown) to direct fuel to each of the flextensional drop ejectors. The fuel droplets 120 are fired directly into the fuel passages 114 to form the fuel layers 122. As discussed in greater detail below, the use of flextensional drop ejectors allows fuel to be fired into the fuel passages 114 in a variety of ways.

Although the present inventions are not limited to any particular type of flextensional drop ejector, the exemplary flextensional drop ejectors 172 each include a substrate 176, walls 178 and a flexible membrane 180 that is secured to the walls. A plurality of annular fuel ejection chambers 182 are defined by the substrate 176, walls 178 and flexible membrane 180. Fuel is supplied to the fuel ejection chambers 182 through supply channels 184 and ejected through nozzles 186 (or other orifices). A plurality of annular piezoelectric elements 188 are positioned around the nozzles 186 on the membrane 180. The annular piezoelectric elements 188 include a piezoelectric transducer 190 (which is preferably also used as the inter-electrode dielectric) and a pair of conductors 192a and 192b that are positioned about the transducer. The conductors 192a and 192b are connected to a power supply/driver (not shown) that implements the firing of the piezoelectric transducers 190.

The disk-shaped portions of the flexible membrane 180 that are not directly secured to the walls 178 are driven by the piezoelectric transducers 190 when an AC excitation voltage is applied to the transducers. The flexible membrane portions 180a will preferably be driven such that they oscillate at a resonant frequency. Referring more specifically to Figure 16, the piezoelectric transducer 190 may be used to drive the flexible membrane portion 180a at its first resonant mode of deflection between the solid and dash line positions shown. Maximum deflection is at the center of the flexible membrane portion 180a and fuel will be ejected through the nozzle 186 when the membrane portion is in the solid line position. The fuel droplet will travel in a direction that is generally perpendicular to the plane defined by the outermost portion of the nozzle (i.e. straight out of the nozzle). Such an arrangement may be used to fire a plurality of droplets straight into the fuel passages 114 to form the fuel layers 122 in the manner described above.

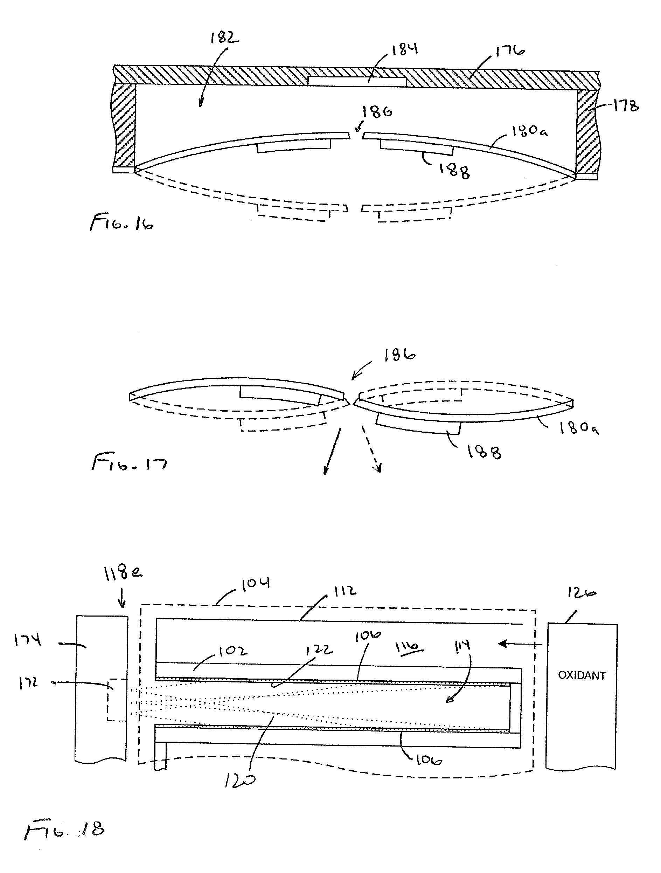

As illustrated for example in Figure 17, the flexible membrane portions 180a may also be driven at the second resonant mode of deflection and the maximum deflection in this mode is shown in solid and dash lines. Instead of moving back and forth in the manner illustrated in Figure 16, the center of the flexible membrane portion 180a (and the nozzle 186) simply rotates back and forth such that it faces in different direction at the two maximum deflection points. Fuel droplets are ejected through the nozzle 186 at each instance of maximum deflection of the flexible membrane portion 180a in the directions identified by the solid and dash line arrows in Figure 17. As a result, each nozzle 186 in the flextensional drop ejector 172 will fire fuel droplets toward the surface of each anode 106 in the manner illustrated for example in Figure 18. Depending on the expected travel distance, drop size may be varied from one nozzle to the next by, for example, varying the amount of deflection of the flexible membrane portions 180a by varying the magnitude of the applied AC voltage and/or the size of the nozzles 186. Other resonant modes, such as the sixth resonant mode, or non-resonant modes may also be applied in order to increase drop velocity, modulate bubble trapping location(s), improve directionality or improve reliability.

Although the shape of the membrane portion 180a in the exemplary embodiments is circular, other shapes can be made to resonate and eject fluid drops. For example, an elliptical membrane can eject two drops from its focal points at resonance. Square and rectangular membranes are other examples of suitably shaped membranes. Additional flextensional drop ejectors, which may be used in combination with any of the embodiments illustrated in Figures 4-8, are described below with reference to Figures 23a-26i.

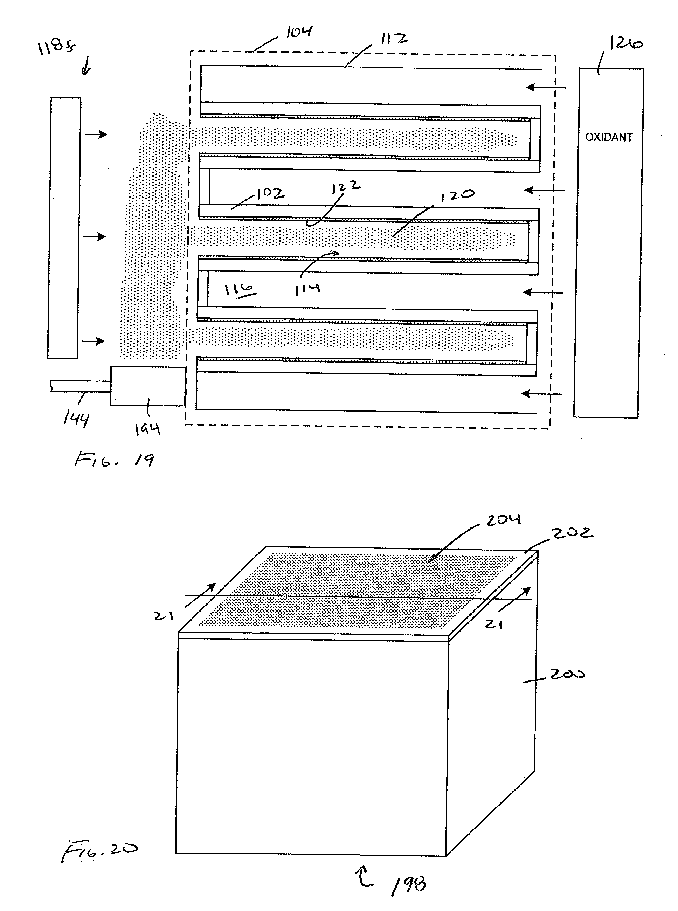

Turning to Figure 19, a fuel cell system (such as the fuel cell system 100 illustrated in Figure 1) may be provided with a fuel supply apparatus 118f that produces droplets with an ultrasonic atomizer and ultrasonic atomizers may be used in place of thermal drop ejector in the embodiment illustrated in Figure 7. The fuel supply apparatus 118f includes an ultrasonic atomizer 194 that is positioned such that it fires the fuel droplets 120 upwardly. The droplets 120 are blown by a fan 148 into the fuel passages 114 to form the fuel layers 122 on the surface of the anodes. Although any suitable atomizer may be may be incorporated into the exemplary fuel supply apparatus 118f, one specific example is the Mystique™ Ultrasonic Nebulizer by AirSep Corporation, located 401 Creekside Drive Buffalo, NY 14228-2085.

One limitation of conventional ultrasonic atomizers, such as that illustrated in Figure 19, is that they must be operated in an upright orientation. In accordance with an invention herein, an ultrasonic atomizer that may be operated in any orientation is generally represented by reference numeral 198 in Figures 20 and 21. The exemplary ultrasonic atomizer illustrated in Figures 20 and 21 may be used in place of thermal drop ejector(s) in any of the embodiments illustrated in Figures 4-8, or used in any other application that requires a liquid to be atomized.

Viewed from the exterior illustrated in Figure 20, the exemplary atomizer 198 includes a housing 200 and a nozzle plate 202 with a plurality of nozzles 204 (or other orifices). Turning to Figures 21 and 22, the housing 200 includes side walls 206a and 206b, a front wall 208a, a rear wall 208b, a bottom wall 210, and a vibrating element tray 212 that supports a vibrating element 214. The walls and tray together define a fuel (or other liquid) reservoir 216 and fuel passages 218a and 218b. The vibrating element tray 212 supports the vibrating element 214 such that the top surface (in the orientation illustrated in Figure 21) of the vibrating element is essentially flush with top of the housing 200. To that end, the vibrating element tray 212 may be provided with an indentation 220 that receives the vibrating element 214.

The exemplary vibrating element tray 212 also preferably includes an open region 222 into which the vibrating element 214 will deflect when vibrating. One advantage of such an arrangement is that the vibrating element 214 will only be moving the fuel or other liquid that is being atomized, i.e. the liquid on the top surface (in the orientation illustrated in Figure 21) of the vibrating element. As such, no energy will be wasted moving fuel or other liquid that would be in contact with the bottom surface of the vibrating element 214, but for the presence of the vibrating element tray 212 and open region 222.

A spacing layer 224 is preferably positioned between the top of the housing 200 and the nozzle plate 202 such that an open region 226 for fuel (or other liquid) is formed between the vibrating element 214 and the nozzle plate 202. The open region 226 should be thin enough to create a capillary force that will draw fuel (or other liquid) out of the reservoir 216, through the passages 218a and 218b, and into the open region. The capillary force should also be strong enough to hold the liquid in place when the atomizer is not in an upright position. In addition, the thickness dimension of the open region 226 will depend on factors such as drop size and the magnitude of the deflection of the vibrating element 214. The open region 226 is between about 5 µm and about 50 µm thick in the exemplary implementation. Additionally, the exemplary reservoir 216 will include a foam element or a pressurized bag (not shown) that provides additional force to drive the fuel (or other liquid) into the open region 226.

The exemplary vibrating element 214 is preferably a two-part assembly that includes an elastic element 228 and a piezoelectric element 230. The elastic element 228, which is preferably a sheet of metal or plastic, may be secured to the indentation 220 through the use of adhesive material 232 or another suitable instrumentality. Optionally, additional adhesive material 234 may be placed over the elastic element 228 to effect a seal. The surface area (or footprint) of the piezoelectric element 230 should be slightly less than that of the elastic element 228 and the opening defined by the inner perimeter of the indentation 220. Suitable materials for the piezoelectric element 230 include ZnO and PZT. The housing 200 is provided with a channel 236 through which electrical connection to piezoelectric element 228 may be made.

Turning to Figures 23a-25, a flextensional drop ejector in accordance with a present invention may be formed from two subassemblies that are eventually laminated together to form the drop ejector. The subassemblies in the exemplary embodiment are a fluidic chamber subassembly and a nozzle plate subassembly. The flextensional drop ejector may be used in the fuel cell fuel delivery systems described above, or in other applications such as, for example, inkjet printers, direct-write photolithography apparatus, medicine dispensing apparatus, and engine fuel injection apparatus.

One exemplary method of manufacturing a fluidic chamber subassembly is illustrated in Figures 23a-23d. First, a photosensitive material 236 is deposited onto a substrate 238 by a techniques such as spin coating or dry film lamination. The substrate 238 is preferably formed from glass or ceramic, but other materials (such as silicon) may also be employed. [Figure 23a.] Glass or ceramic materials are generally less expensive than silicon, but can still be sand drilled, and ceramic materials can be molded to have pre-formed cavities for fluidic or electronic inter-connection with other substrates, which reduces manufacturing costs. Portions of the photosensitive material 236 are then removed to form the ejection chambers 240 and channels 242. [Figures 23b and 23c.] The remaining photosensitive material 236 will ultimately support the nozzle plate subassembly. A fluidic connection to the supply of fuel, or other fluid, is then formed by drilling apertures 244 through the substrate 238 to the channels 242 to complete the fluidic chamber subassembly 246. Preferably, the apertures 244 are formed using a mechanical ablation process, such as sand drilling or diamond sawing, or a thermal ablation process, such as laser drilling, which are typically less expensive than chemical etching processes. Nevertheless, the apertures 244 may be formed, either in whole or in part, by a chemical etching process if desired.

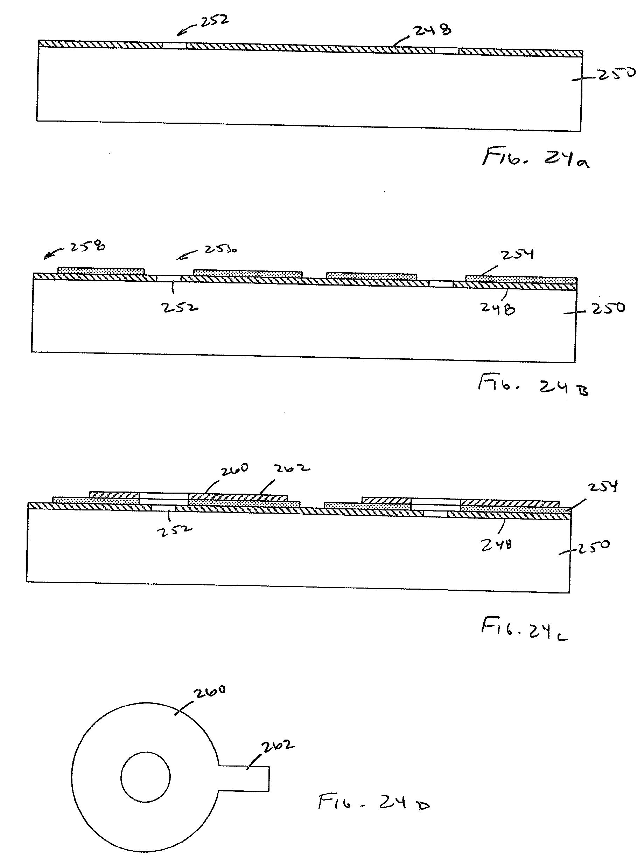

One exemplary method of manufacturing a nozzle plate subassembly is illustrated in Figures 24a-24e. Preferably, a plurality of singulatable nozzle plates, which may be separated from one another and then laminated onto the fluidic chamber subassembly 246, will be formed. One singulatable nozzle plate is shown in Figures 24a-24e.

The exemplary method begins with the formation of a flexible metal membrane layer 248 on a mandrel 250 by, for example, an electro or electroless plating process. The metal membrane layer 248 acts as the flexible membrane and, in the illustrated embodiment, also acts one of the piezoelectric element conductors. [Figure 24a.] Suitable metals and laminates of metals for metal membrane layer 248 include nickel ("Ni"), gold ("Au"), palladium ("Pd"), rhodium ("Rh"), nickel/proactinium ("Ni/Pa"), nickel/tantalum ("Ni/Ta"), nickel/rhodium ("Ni/Rh"). The nozzles 252 (or other types of orifices) are also formed during the plating process. Next, a piezo material layer 254 is formed on the metal membrane layer 248 by a process such as, sputter deposition or sol-gel processing, and patterned, by a process such as plasma etching or wet etching, to provide openings 256 for the nozzles 252 as well as openings 258 for conductive pads (sometimes referred to as "bond pads"). [Figure 24b.] Suitable piezo materials include ZnO and PZT. The use of PZT is advantageous, as compared to ZnO, because it has larger piezo actuation coefficients. It should be noted, however, that PZT is not initially piezoelectric and must be poled in a strong electric field prior to use as piezo element. Thus, one advantage of this embodiment is that the poling process may be performed on the mandrel 250 while the orifice plate subassembly is being manufactured. PZT may not be used in manufacturing methods where an entire flextensional device is formed as single assembly (as opposed to two subassemblies) because the poling process would adversely effect other elements of the device, such as field effect transistors and other voltage or charge sensitive thin film structures.

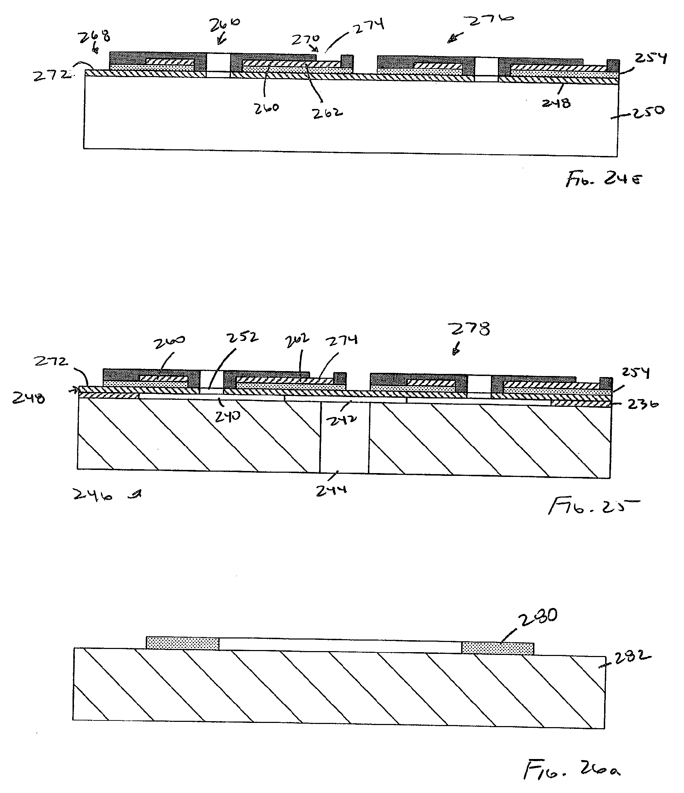

The next step in the exemplary nozzle plate formation method is forming and patterning of a second metal layer, by a process such as deposition and etching, to produce annular metal discs 260 around the nozzles 252 and electrical leads 262. [Figure 24c.] Suitable metals for this layer include Ti/Au and Al. A top view of one of the annular metal discs 260 and associated electrical lead 262 is illustrated in Figure 24d. A layer dielectric material 264, such as silicon nitride ("SiN"), silicon carbide ("SiC"), or polyimide, is then deposited and patterned by a process such as deposition and etch, or direct photolithography for the case of polyimide, with openings 266, 268 and 270 for the nozzles 252 and connections to the metal membrane layer 248 and leads 262. [Figure 24e.] More specifically, the openings 268 and 270 define conductive pads 272 and 274 of the completed the nozzle plate subassemblies 276. The conductive pads 272, which are connected to the metal membrane layer 248, will preferably be connected to ground, while the conductive pads 274, which are connected to the annular metal discs 260 by way of the electrical leads 262, will preferably be connected to a source of excitation voltage. The connections to ground and the excitation voltage may also be reversed. Here, however, both sides of the metal membrane layer 248 would have to be passivated.

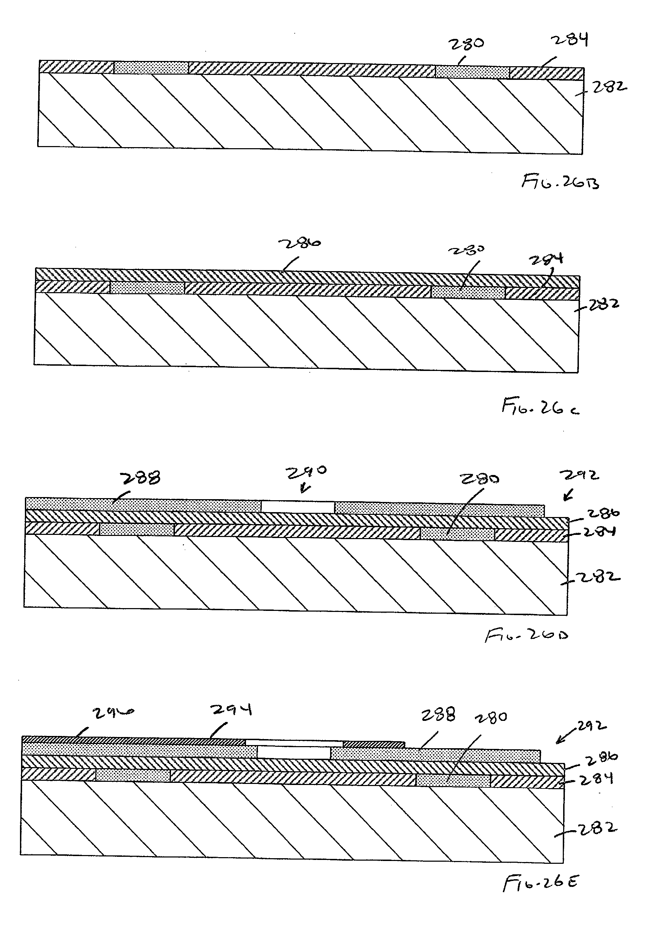

As illustrated for example in Figure 25, the exemplary flextensional drop ejector, which is generally represented by reference numeral 278, is completed by removing the nozzle plate subassemblies 276 from the mandrel 250 and laminating them onto the fluidic chamber subassembly 246. The nozzles 252 are preferably centered with respect to the ejection chambers 240 during the lamination process. During use, the flexible metal membrane layer 248 oscillate at a resonant frequency when an AC excitation voltage is applied to either the annular metal disc 260 or the flexible metal membrane layer.

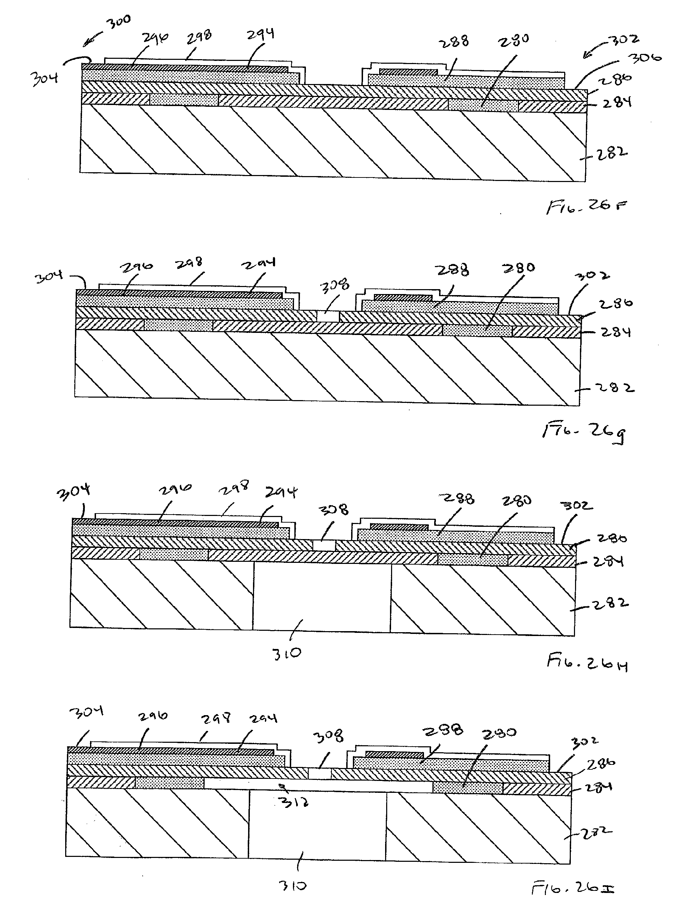

A flextensional drop ejector in accordance with a present invention may also be formed by the exemplary method illustrated in Figures 26a-26i. Although a single nozzle and ejection chamber are shown in the Figures, the actual number will depend on the intended application. The flextensional drop ejector may be used in the fuel cell fuel delivery systems described above, or in other applications such as, for example, inkjet printers, direct-write photolithography apparatus, medicine dispensing apparatus, and engine fuel injection apparatus.

A chamber boundary layer 280, which is annularly shaped in the exemplary embodiment, is deposited and patterned on a silicon wafer 282 or other suitable substrate. [Figure 26a.] The chamber boundary layer 280, and its function during the ejection chamber formation process, are discussed below with reference to Figure 26i. Suitable materials for the chamber boundary layer included silicon dioxide ("SiO₂"), polymers that are temperature robust, and other materials which are capable of acting as a boundary in the manner described below with reference to Figure 26i. A chamber boundary layer formed in this fashion is dimensionally accurate and chemically robust. Next, a sacrificial layer 284 of, for example, polysilicon is deposited and planarized using a chemical-mechanical polishing process. [Figure 26b.] The chamber boundary layer 280 will act as a stop during the polishing process. Other sacrificial layer materials include photoresist and Al.

A flexible metal membrane layer 286 is then deposited over the chamber boundary layer 280 and sacrificial layer 284. [Figure 26c.] In alternate embodiments, the flexible membrane may be formed with a dielectric such as silicon nitride. The metal membrane layer 286 acts as both the flexible membrane and one of the piezoelectric element conductors associated with the nozzle that is formed later in the exemplary process. [Formation of the nozzle 308 is discussed below with reference to Figure 26g.] Suitable metals include Au, Ni, Pd and Rh. A layer of piezoelectric/dielectric material 288, such as ZnO, is deposited on the metal membrane layer 286 and etched to form openings 290 and 292 for the nozzle and a conductive pad that will be connected to the metal membrane layer. [Figure 26d.] A second metal layer is deposited and etched to form an annular metal disc 294 and an electrical lead 296. [Figure 26e.] The second metal layer is preferably formed from two metal layers, i.e. a relatively thin (about 200 Angstroms) layer of titanium ("Ti") for adhesion and a relative thick (about 800 Angstroms) layer of Au for conduction.

Next, a passivation layer 298, such as a dielectric or polymer passivation layer, is deposited and patterned over the annular metal disc 294, electrical lead 296 and exposed portion of the piezoelectric/dielectric material 288. [Figure 26f.] Openings 300 and 302 in the passivation layer 298, which respectively define conductive pads 304 and 306, are also formed. Suitable processes include, for example, a plasma enhanced chemical vapor deposition and etching process or a spin coating-photomask/developing process. The conductive pad 304, which is connected to the annular metal disc 294 by way of the electrical lead 296 will preferably be connected to a source of excitation voltage, while the conductive pad 306, which is connected to the metal membrane layer 286, will preferably be connected to ground. The nozzle 308 is then formed through the metal membrane 286 by, for example, a bore etching process. [Figure 26g.]

The next portions of the exemplary process are the formation of the fluidic connection to the supply of fuel (or other fluid) and the formation of the ejection chamber. First, as illustrated for example in Figure 26h, a feed aperture 310 is formed in the wafer 282 by, for example, a deep reactive ion etching process or other dry etching process. The ejection chamber 312 is then formed, preferably by a wet etching process such as tetramethyl ammonium hydroxide ("TMAH") etching when the sacrificial layer 284 is formed from polysilicon. [Figure 26i.] All of the sacrificial layer 284 within the chamber boundary layer 280 will be removed. However, because the SiO₂ (or other suitable material) that is used to form the chamber boundary layer 280 is dimensionally stable and chemically inert to the TMAH (or other suitable material), the chamber boundary layer will not be etched and the inner surface of the chamber boundary layer will define a properly sized ejection chamber 312 when the sacrificial layer 284 is removed. During use, the flexible metal membrane layer 286 oscillate at a resonant frequency when an AC excitation voltage is applied to either the annular metal disc 294 or the flexible metal membrane layer.

It should be noted that chamber boundary layers, such as the exemplary boundary layer 280, may also be employed in those instances where the flexible membrane is formed from a dielectric material instead of metal. Here, a bottom electrode layer would be formed between the membrane and the piezoelectric/dielectric layer, and preferably on the membrane. The bottom electrode layer would be connected to one of an excitation voltage and ground, while the top electrode layer would be connected to the other of the excitation voltage and ground. The bottom electrode layer does not have to be passivated from the membrane because the membrane is dielectric. The bottom electrode is also isolated from the top electrode by piezoelectric/dielectric layer.

It should also be noted that the flextensional devices described above with reference to Figures 23a-26i are not drawn to scale. The dimensions of these devices, and the various elements therein, may vary to suit the needs of particular applications. Some embodiments of the flextensional devices described above with reference to Figures 23a-26i may have the following exemplary dimensions. The ejection chambers 240 and 312 are preferably about 10 µm to about 50 µm in height and about 20 µm to about 200 µm in diameter/width. The apertures 244 and 310 are preferably about 40 µm to about 500 µm in diameter/width. The metal membrane layers 248 and 286 are preferably about 0.50 µm to about 50 µm thick, while the nozzles 252 and 308 are preferably about 2 µm to about 50 µm in diameter. The layers of piezo material 254 and 288 are preferably about 0.20 µm to about 500 µm thick, have an inner diameter of about 4 µm to about 60 µm, and an outer diameter of about 20 µm or greater. The metal discs 260 and 294 are preferably about 0.1 µm to about 1 µm thick, have an inner diameter of about 10 µm to about 100 µm, and an outer diameter of about 20 µm to about 250 µm. Additionally, although the exemplary embodiments are based on circular shapes, embodiments may also be based on other shapes, such as elliptical, square, rectangular and square shapes.

Although the present inventions have been described in terms of the preferred embodiments above, numerous modifications and/or additions to the above-described preferred embodiments would be readily apparent to one skilled in the art. It is intended that the scope of the present inventions extend to all such modifications and/or additions.

## Claims

1. A fuel cell system, comprising:
a fuel cell (102) including at least one anode (106); and
a fuel supply apparatus (118) that supplies a plurality of fuel droplets (120) to the at least one anode (106).

2. A fuel cell system as claimed in claim 1, further comprising:
a controller (127) adapted to monitor a rate of fuel consumption at the at least one anode (106) and to control the fuel supply apparatus (118) to supply droplets (120) at a rate corresponding to the rate of fuel consumption.

3. A fuel cell system as claimed in claim 1, wherein the fuel cell (102) comprises at least one anode pair, the anodes (106) within the at least one anode pair face one another and define a fuel passage (114) therebetween, and the fuel supply apparatus (118) directs the fuel droplets (120) into the fuel passage (114).

4. A fuel cell system as claimed in claim 1, wherein the fuel supply apparatus (118) comprises a thermal drop ejector (128).

5. A fuel cell system as claimed in claim 1, wherein the fuel supply apparatus (118) comprises a piezoelectric drop ejector (152).

6. A fuel cell system as claimed in claim 1, wherein the fuel supply apparatus (118) comprises a flextensional drop ejector (172).

7. A fuel cell system as claimed in claim 1, wherein the fuel supply apparatus (118) comprises an ultrasonic atomizer (194).

8. A fuel cell system as claimed in claim 1, further comprising:
storage means for storing energy generated with fuel that is on the at least one anode (106) when the system is shut down.

9. A fuel cell system as claimed in claim 1, further comprising:
a controller (127) adapted to monitor a rate of fuel consumption at the at least one anode (106) and to control the fuel supply apparatus (118) to supply droplets (120) at a rate that reduces fuel crossover.
